Europäisches Patentamt

European Patent Office

Office européen des brevets

(11) Veröffentlichungsnummer: **0 063 237**

**A1**

(12) # EUROPÄISCHE PATENTANMELDUNG

(21) Anmeldenummer: **82102012.0**

(22) Anmeldetag: **12.03.82**

(51) Int. Cl.³: **F 16 K 19/00**

(30) Priorität: **18.04.81 DE 3115836**

(43) Veröffentlichungstag der Anmeldung:
**27.10.82 Patentblatt 82/43**

(84) Benannte Vertragsstaaten:
**AT BE CH DE FR GB IT LI NL SE**

(71) Anmelder: **Rubinetterie Rapetti S.p.A.**
**Via S. Martino della Battaglia 3**
**I-46043 Castiglione delle Stiviere(IT)**

(72) Erfinder: **Rapetti, Ferruccio**
**Via Belvedere 17**
**I-46043 Castiglione delle Stiviere(IT)**

(74) Vertreter: **Patentanwaltsbüro Cohausz & Florack**
**Postfach 14 01 47**
**D-4000 Düsseldorf 1(DE)**

(54) **Thermostatmischventil.**

(57) In einem Thermostatmischventil ist ein von der Mischtemperatur abhängig axial bewegtes Thermostatteil (5) mit
einem Ventilstellglied verbunden,

EP 0 063 237 A1

./...

# COHAUSZ & FLORACK

0063237

### PATENTANWALTSBÜRO

SCHUMANNSTR. 97 · D-4000 DÜSSELDORF

Telefon: (02 11) 68 33 46                    Telex: 0858 6513 cop d

PATENTANWÄLTE:

Dipl.-Ing. W. COHAUSZ · Dipl.-Ing. R. KNAUF · Dr.-Ing., Dipl.-Wirtsch.-Ing. A. GERBER · Dipl.-Ing. H. B. COHAUSZ

- 1 -

Rubinetterie Rapetti S.p.A.

Via S. Martino della Battaglia, 3

I-46043 Castiglione delle Stiviere

(Italien)

Thermostatmischventil

Die Erfindung betrifft ein Thermostatmischventil mit
einem von der Mischtemperatur abhängig axial bewegten
Thermostatteil, mit dem ein Ventilstellglied verbunden ist, das über je einen Regelspalt Warm- und Kaltwasser einem Auslaß zuführt.

Es sind Thermostatmischventile bekannt, bei denen Verstelleinrichtungen, Temperaturfühler, Federbalg und
Ventilstellglied eine kartuschenförmige Einheit bilden,
die aus dem Ventilgehäuse herausnehmbar ist. Immer
dann, wenn das Ventil oder das Ventilstellglied inspiziert, gewartet oder justiert werden soll, muß die
gesamte Einheit demontiert werden. Hierbei geht die
Justierung des Thermostaten verloren, so daß danach
Thermostat und Ventilstellglied neu einjustiert werden
müssen.

35 049
HC/Be

Aufgabe der Erfindung ist es, ein Ventil der eingangs genannten Art derart zu verbessern, daß eine Inspektion, Wartung und Justierung des Ventils und des Ventilstellglieds möglich ist, ohne den das Ventilstellglied bewegenden Thermostatteil demontieren zu müssen.

Diese Aufgabe wird erfindungsgemäß dadurch gelöst, daß das Ventilstellglied eine zur Bewegungsrichtung des Thermostatteils axiale oder koaxiale Hülse ist, die am Thermostatteil lösbar befestigt ist und deren beide Stirnseiten jeweils den Regelspalt für das Warm- und Kaltwasser bilden, und daß im Ventilgehäuse koaxial zur Hülse eine nach außen führende, kreisförmige Öffnung (18) vorgesehen ist, durch die die Hülse (6) erreichbar ist, deren Durchmesser größer ist als der Außendurchmesser der Hülse und die durch ein Verschlußteil (19) lösbar verschlossen ist.

Das Ventilstellglied ist nicht ein Teil des Thermostaten, sondern von diesem lösbar und sehr leicht erreichbar. Das hülsenförmige Ventilstellglied kann justiert oder demontiert und das Ventil inspiziert und gewartet werden, ohne daß die übrigen Thermostatteile demontiert werden und nach dem Wiedereinbau neu justiert werden müssen. Das Ventilstellglied ist damit nicht mehr ein unlösbarer Bestandteil des kartuschenförmigen Thermostaten. Das Ventil ist konstruktiv besonders einfach, nicht störanfällig und erzielt eine hohe Steuer- und Regelgenauigkeit. Dabei baut das Ventil sehr klein.

Vorteilhafte Ausgestaltungen der Erfindung sind in den Unteransprüchen aufgeführt.

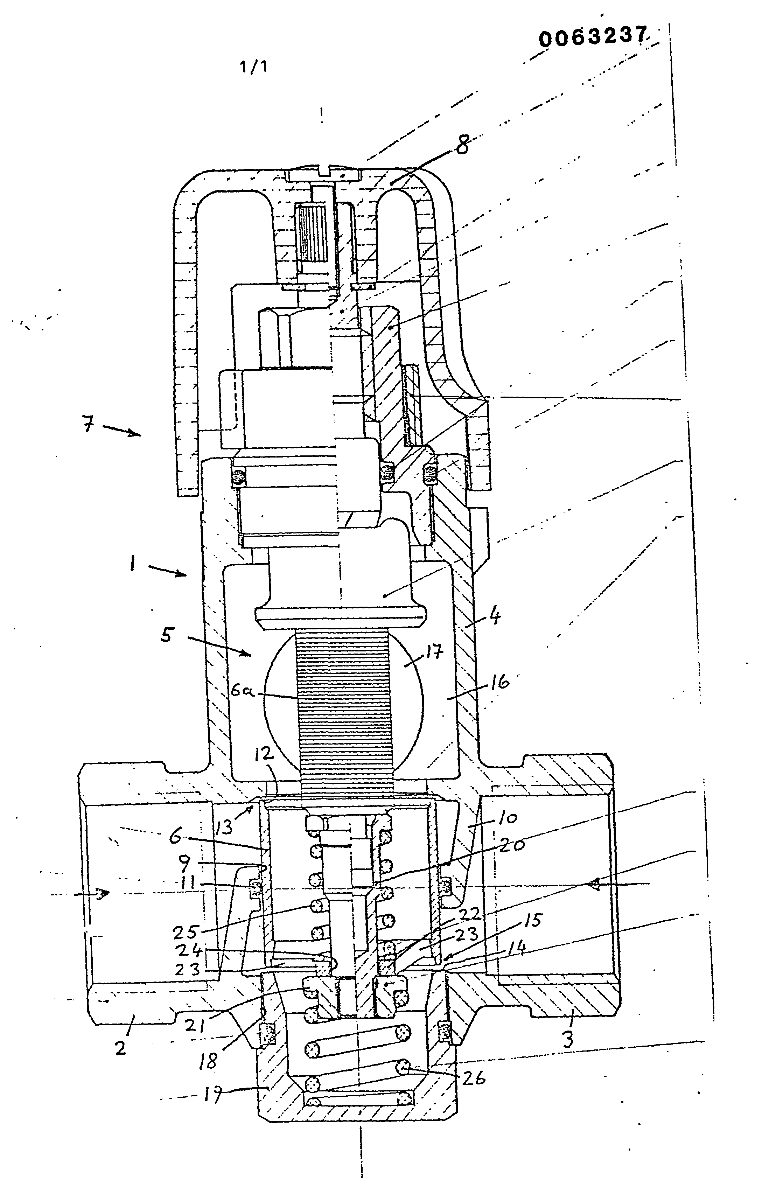

Ein Ausführungsbeispiel der Erfindung ist in der Zeichnung im Schnitt dargestellt und wird im folgenden näher
beschrieben.

Das Ventilgehäuse 1 weist einen Warmwasseranschlußstutzen 23 und einen Kaltwasseranschlußstutzen 2 auf,
die zueinander koaxial liegen. Mittig zwischen diesen
beiden Stutzen geht ein rohrförmiges Gehäuseteil 4
rechtwinklig ab, das einen koaxialen Thermostatteil 5
umgibt, der abhängig von der Mischtemperatur des Warm-
und Kaltwassers eine Hülse 6 als Ventilstellglied bewegt. Der Thermostatteil 5 weist einen mit Gas oder
Flüssigkeit gefüllten Federbalg 6 auf, der koaxial im
Gehäuseteil 4 und damit mit seiner Achse rechtwinklig
zu den Stutzen 2 und 3 angeordnet ist, und dessen Außenwandung als Temperaturfühler arbeitet. An dem den
Stutzen abgewandten Ende ist am Federbalg 6 eine Stellvorrichtung 7 befestigt, die im freien Ende des Gehäuseteils 4 eingeschraubt ist und deren Stellgriff 8
das Gehäuseteil 4 abschließt. Da die Stellvorrichtung
an sich bekannt ist, wird sie nicht weiter beschrieben.

Mittig zwischen den Stutzen 2, 3 ist die Hülse 6 angeordnet, die in einer Öffnung 9 einer Führung 10 durch
Dichtringe 11 abgedichtet einliegt und axial beweglich
ist. Die Hülse 6 befindet sich damit in Höhe der
Stutzen, wobei deren Länge etwa dem Durchmesser der
beiden Stutzen entspricht. Die der Stellvorrichtung 7
zugewandte Stirnseite der Hülse 6 bildet mit einem von
der Innenwandung des Gehäuses gebildeten ersten Ventilsitz 12 einen ersten Regelspalt 13, der den Kaltwasseranschlußstutzen 2 von dem Inneren des Gehäuseteils 4 trennt. Die gegenüberliegende Stirnseite der Hülse 6
kommt an einem zweiten Ventilsitz 14 zur Anlage, der
einen zweiten Regelspalt 15 mit der Hülse bildet und
den Warmwasserstutzen von dem Inneren der Hülse trennt,
so daß das Kaltwasser vom Hülseninneren in das Gehäuseteil 4 fließen kann, dessen Inneres eine Mischkammer
16 bildet. Von der Mischkammer 16 aus geht ein Auslaß
17 für das gemischte Wasser rechtwinklig ab.

In der Gehäusewandung zwischen den beiden Stutzen 2,
3 ist eine Öffnung 18 koaxial zur Hülse 6 und zum
Federbalg 6a eingebracht, deren Innendurchmesser etwas
größer ist als der Außendurchmesser der Hülse 6, und
die ein Innengewinde aufweist. Im Innengewinde ist
eine topfförmige Kappe mit ihrem Außengewinde eingeschraubt. Die der Stellvorrichtung 7 zugewandte ringförmige Stirnseite der Kappe 19 bildet den zweiten
Ventilsitz 14 für die Hülse 6. Hierdurch wird es möglich, durch Verstellung von außen, ohne in die Vorrichtung eingreifen zu müssen, den Ventilspalt zu verändern
und damit das Ventil zu justieren.

An dem der Stellvorrichtung 7 abgewandten Ende des
Federbalgs 6a ist ein Bolzen 20 befestigt und insbesondere angeschraubt, an dessen freiem Ende eine Mutter
21 außen aufgeschraubt ist. Die Hülse 6 weist auf dem
der Stellvorrichtung 7 gegenüberliegenden Ende einen
Boden 22 auf, der für den Durchfluß des warmen Wassers
Öffnungen 23 besitzt und mittig eine Öffnung 24 hat,
mit der der Boden 22 und damit die Hülse auf dem Bolzen 20 verschieblich gelagert ist. Durch eine auf dem
Bolzen 20 koaxial angeordnete Schraubendruckfeder 25 wird der Rand der Öffnung 24 gegen die Mutter 21 gedrückt. Hierdurch wird die Bewegung des Federbalgs 6a
zur Kappe 19 hin durch den zweiten Ventilsitz 14 nicht
beschränkt, sondern auch nach Anlage der Hülse 6 am
Ventilsitz 14 kann der Bolzen 20 und damit der Federbalg 6a sich weiter zur Kappe 19 hin bewegen. Eine in
der zur Hülse koaxialen Kappe 19 koaxial angeordnete
Schraubendruckfeder 26 beaufschlagt die Mutter 21 in
Richtung zur Stellvorrichtung 7.

# COHAUSZ & FLORACK

0063237

PATENTANWALTSBÜRO

SCHUMANNSTR. 97 · D-4000 DÜSSELDORF

Telefon: (02 11) 68 33 46        Telex: 0858 6513 cop d

**PATENTANWÄLTE:**

Dipl.-Ing. W. COHAUSZ · Dipl.-Ing. R. KNAUF · Dr.-Ing., Dipl.-Wirtsch.-Ing. A. GERBER · Dipl.-Ing. H. B. COHAUSZ

– 6 –

## Ansprüche

1. Thermostatmischventil mit einem von der Mischtemperatur abhängig axial bewegten Thermostatteil, mit dem ein Ventilstellglied verbunden ist, das über je einen Regelspalt Warm- und Kaltwasser einem Auslaß zuführt, d a d u r c h  g e k e n n z e i c h - n e t , daß das Ventilstellglied eine zur Bewegungsrichtung des Thermostatteils (5) axiale oder koaxiale Hülse (6) ist, die am Thermostatteil lösbar befestigt ist und deren beide Stirnseiten jeweils den Regelspalt (13,15) für das Warm- und Kaltwasser bilden, und daß im Ventilgehäuse (1) koaxial zur Hülse (6) eine nach außen führende, kreisförmige Öffnung (18) vorgesehen ist, durch die die Hülse (6) erreichbar ist, deren Durchmesser größer ist als der Außendurchmesser der Hülse und die durch ein Verschlußteil (19) lösbar verschlossen ist.

2. Thermostatmischventil nach Anspruch 1, d a d u r c h  g e k e n n z e i c h n e t ,  daß die Öffnung (18) ein Innengewinde aufweist, in die das Verschlußteil (19) einschraubbar ist.

3. Thermostatmischventil nach Anspruch 2, d a d u r c h

HC/Be
35 049

- 7 -

gekennzeichnet , daß das Verschlußteil (19) eine topfförmige Kappe mit Außengewinde
ist, in die eine die Hülse (6) beaufschlagende
Schraubendruckfeder koaxial hineinreicht.

4. Thermostatmischventil nach einem der Ansprüche 1
bis 3, d a d u r c h   g e k e n n z e i c h -
n e t , daß die beiden Stirnseiten der Hülse (6)
jeweils gegen einen koaxialen Ventilsitz (12, 14)
drückbar sind, um zwischen erster Stirnseite und
erstem Ventilsitz (12) Kaltwasser und zwischen zweiter Stirnseite und zweitem Ventilsitz (14) Warmwasser zu steuern.

5. Thermostatmischventil nach einem der Ansprüche 1
bis 4, d a d u r c h   g e k e n n z e i c h -
n e t , daß von den beiden Regelspalten (13, 15)
oder Ventilsitzen (12, 14) das Warm- und Kaltwasser
einer Mischkammer (16) zugeführt wird, in der der
Temperaturfühler und insbesondere das Thermostatteil
(5) angeordnet ist und von dem der Auslaß (17) abgeht.

6. Thermostatmischventil nach einem der Ansprüche 1
bis 5, d a d u r c h   g e k e n n z e i c h -
n e t , daß durch die Hülse (6) ein Bolzen (20) des
Thermostatteils (5) koaxial hindurchreicht, an dem
ein mit Durchflußöffnungen (23) versehener Boden
(22) der Hülse (6) befestigt ist.

7. Thermostatmischventil nach einem der Ansprüche 1
bis 5, d a d u r c h   g e k e n n z e i c h -
n e t , daß durch die Hülse ein Bolzen (20) des

- 8 -

Thermostatteils (5) koaxial hindurchreicht, der an
seinem Ende eine Mutter (21) trägt, gegen die vorzugsweise auf der dem Thermostatteil (5) zugewandten
Stirnseite ein Boden (22) der Hülse (6) durch eine
Feder (25) gedrückt wird, daß der Bolzen (20) durch
eine mittlere Öffnung des Bodens reicht, und daß
der Boden (22) Durchflußöffnungen (23) aufweist.

8. Thermostatmischventil nach Anspruch 7, d a d u r c h
g e k e n n z e i c h n e t , daß die den Hülsenboden (22) beaufschlagende Feder (25) eine Schraubendruckfeder ist, die den Bolzen (20) koaxial umgibt.

9. Thermostatmischventil nach einem der Ansprüche 1
bis 8, d a d u r c h   g e k e n n z e i c h n e t,
daß die Hülse (6) zwischen dem Warmwassereinlaß (3)
und dem Kaltwassereinlaß (2) angeordnet ist.

10. Thermostatmischventil nach einem der Ansprüche 1
bis 9, d a d u r c h   g e k e n n z e i c h -
n e t , daß das Thermostatteil (5) einen mit Flüssigkeit oder Gas gefüllten Federbalg (6a) aufweist,
der in der Mischkammer (16) angeordnet ist.

11. Thermostatmischventil nach einem der Ansprüche 1
bis 10, d a d u r c h   g e k e n n z e i c h -
n e t , daß das Verschlußteil (19) den zweiten
Ventilsitz (14) für die Hülse (6) bildet.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 340 790 (GROHE)<br>* Ansprüche 1 bis 3; Fig. 1, 2, Positionen 13, 21 *<br>& FR - A1 - 2 240 396 | 1-6,8<br>11 |
| | -- | |
| A | DK - C - 125 763 (METAALWARENFABRIEK "VENLO")<br>* Seite 2, Zeilen 39 bis 40; Fig. 1, Position 13 * | 1,2,4-6,<br>9,11 |
| | -- | |
| A | DE - B2 - 2 433 354 (GROHE)<br>---- | |

### KLASSIFIKATION DER ANMELDUNG (Int Cl )

F 16 K 19/00

### RECHERCHIERTE SACHGEBIETE (Int Cl.³)

F 16 K 11/00

F 16 K 19/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 07-05-1982 | SCHLABBACH |

EPA form 1503.1   06.78